# EUROPÄISCHE PATENTSCHRIFT

(11) **EP 0 955 471 B1**
(45) Veröffentlichungstag und Bekanntmachung des Hinweises auf die Patenterteilung: **21.07.2004**
(21) Anmeldenummer: 99107468.3
(22) Anmeldetag: 29.04.1999
(51) Int. Cl.: F15B 11/028, G05D 16/10

(54) **Elektrohydraulischer Spannmodul**
Electrohydraulic clamping module
Module de serrage électrohydraulique

(30) Priorität: 07.05.1998 DE 29808294 U
(43) Veröffentlichungstag der Anmeldung: 10.11.1999
(73) Patentinhaber: HAWE Hydraulik GmbH & Co. KG, 81673 München (DE)
(72) Erfinder: Neumair, Georg, Dipl.-Ing.(FH), 85402 Thalhausen (DE)
(74) Vertreter: Grünecker, Kinkeldey, Stockmair & Schwanhäusser Anwaltssozietät

(56) Entgegenhaltungen:
- WO-A-87/01171
- DE-A- 3 204 055
- DE-A- 4 237 901
- DE-A- 4 446 538
- DE-U- 29 615 498

## Beschreibung

Die Erfindung betrifft einen elektrohydraulischen Spannmodul der im Oberbegriff des Anspruchs 1 angegebenen Art.

Solche Spannmodule sind bekannt aus DE 297 10 129 (Fig. 2), DE 297 10 127 und DE 297 10 128. Das für die Richtungssteuerung des Spannelements verantwortliche Wegesteuerventil ist in der Absperrstellung dank einer Sitzventilfunktion leckagefrei. Ein elektrischer getrennt angeordneter Druckschalter überwacht den Druck in der Pumpenleitung und schaltet die Pumpe nach Bedarf ein oder aus. Der Spanndruck für das Spannelement wird geregelt über ein vorgesteuertes 3/2-Druckregelventil in Schieberbauweise, dem im Vorsteuerkreis ein Sicherheitsventil mit leckagefreier Absperrstellung und ein Vorsteuerventil zugeordnet sind. Die Drucküberwachung des Spanndruckes erfolgt über ein eigenes Differenzdruckventil, das vom Vorsteuerdruck des Vorsteuerventils und einem Referenzdruck aus dem Spanndruck beaufschlagt wird und mit einem Schalter kooperiert. Der Druckregelungsteil des Spannmoduls ist aufwendig. Leckagen, z.B. zum Rücklauf, treten in Ruhephasen und im Betrieb beispielsweise im 3/2-Druckregelventil auf und führen in Ruhephasen dazu, dass dann die Pumpe über den die Druckleitung überwachenden Druckschalter öfters ein- und ausgeschaltet wird. Deshalb wird eine leistungsfähige Pumpe benötigt.

Bei einem gattungsgemäßen, aus DE 42 37 901 A bekannten elektrohydraulischen Spannmodul ist als Druckregelventil ein Druckminderventil mit integriertem Druckschalter bekannt. Der als Schieber funktionsnotwendig mit Leckage arbeitende Regelkolben des Druckminderventils erzeugt beim Regeln und sogar in der Absperrstellung Leckage, z.B. zum Rücklauf, so dass das Druckminderventil in einem Spannmodul nicht brauchbar ist, bei dem in der Absperrstellung des Druckminderventils Leckagefreiheit benötigt wird, damit sich der Spanndruck oder ein Ruhedruck nicht ungewollt verändert. Der die Arbeitsströmung steuernde Regelkolben betätigt den elektrischen Schalter direkt oder indirekt über einen parallele Kolben bzw. einen Nockenmechanismus. Bei einer Verstellung der Regelkraft kann eine Nachjustierung des Schaltpunkts des Druckschalters erforderlich werden.

Ein Druckminderventil gemäß DE-U-296 154 98 ermöglicht eine feinfühlige Druckregelung unabhängig von Druckschwankungen des ungeregelten Drucks, weil der das Schließglied relativ zum Ventilsitz einstellende Steuerkolben nur vom geregelten Druck gegen die Regelkraft verstellt wird, die den Wert des zu regelnden Drucks bestimmt. Solche als Sitzventile ausgebildeten Druckminderventile werden in der Hochdruckhydraulik verwendet, wenn neben der Druckregelung die Forderung einer leckagefreien Absperrfunktion zu erfüllen ist, weil Sitzventile im Gegensatz zu Schieberventilen in der Absperrstellung leckagefrei dicht sind. Eine Überwachung des geregelten Drucks ist nicht vorgesehen. Der Steuerkolben ist mit einem größeren Bewegungsdämpf-Kolben verbunden, der den geregelten Druck über eine Drosselstrecke zum Steuerkolben gelangen lässt, so dass die Bewegungen des Steuerkolbens verzögert werden.

Weiterer Stand der Technik ist zu finden in DE-A-44 46 538, DE-A-32 04 055 und WO/A-87 01 171.

Der Erfindung liegt die Aufgabe zugrunde, einen elektrohydraulischen Spannmodul der eingangs genannten Art zu schaffen, der eine zuverlässige, nachjustierfreie Drucküberwachung aufweist und in der Absperrstellung leckagefrei dicht ist.

Die gestellte Aufgabe wird mit den Merkmalen des Anspruchs 1 gelöst.

Für einen elektrohydraulischen Spannmodul untypisch wird als Druckregelventil ein einfaches und direkt regelndes Sitzventil ohne Verbindung zum Rücklauf (2-Wege) verwendet, das in Zusammenwirkung mit dem leckagefrei absperrenden Wegesteuerventil in der Absperrstellung Leckage ausschließt. Ein aufwendiger leckagebehafteter Vorsteuerkreis entfällt. Das in der Absperrstellung leckagefreie Sitzventil mit integrierter Drucküberwachung dient zur Druckregelung und zum Halten des Drucks in dem Spannmodul der Werkzeugmaschine. Da in dem Sitzventil mittels des nur vom geregelten Druck direkt gegen die Regelkraft beaufschlagten Steuerkolbens der eingestellte Wert des geregelten Drucks immer bei derselben Position des Steuerkolbens vorliegt, die unabhängig von der Größe der eingestellten Regelkraft ist, lässt sich die Drucküberwachung baulich sehr einfach gestalten, wenn der Steuerkolben den Drucküberwachungssensor über eine mechanische Kopplung betätigt, und entfällt bei einer Verstellung des Werts für den geregelten Druck bzw. für den Spanndruck durch Änderung der Regelkraft die Notwendigkeit einer Nachjustierung des Drucküberwachungssensors. Denn es wird der Schaltpunkt des Drucküberwachungssensors auf diese Position des Steuerkolbens eingestellt, bei der der eingestellte Wert des geregelten Drucks bzw. ein bewusst gewählter, etwas geringerer Druckwert vorliegt, um ein GUT-Signal oder FEHLER-Signal an eine übergeordnete Steuereinheit zu übermitteln. Diese Position, auf die der Schaltpunkt eingestellt ist, nimmt der Steuerkolben nämlich unabhängig vom eingestellten Wert der Regelkraft ein. Deshalb braucht der Drucküberwachungssensor nach einer Veränderung des Werts des geregelten Drucks nicht nachjustiert zu werden. Dank der Leckagefreiheit kann eine kleinbauende Pumpe oder ein exakt auslegbares Pumpensystem (Stufenpumpe) verwendet werden. Gerade für Werkzeugmaschinen, bei denen die Spannvorrichtung leckagefrei sein muss, ist dies eine optimale und kostengünstige Kombination.

Bei einer Ausführungsform wird nicht nur der Spanndruck in wenigstens einer Verbraucherleitung des Spannelementes geregelt und überwacht, sondern sogar die eine hinsichtlich des Spanndruckes kritische Bewegungsrichtung des Spannelements, was für Werkzeugmaschinen mit einer übergeordneten Steuereinheit sehr aussagekräftige Signale bedeutet.

Bei einer weiteren Ausführungsform ist der Drucküberwachungssensor ein elektrischer Schalter oder ein Mikroschalter, der über die mechanische Kopplung vom Steuerkolben betätigt wird. Solche Schalter sind kostengünstig, zuverlässig und beanspruchen wenig Bauraum. Der Steuerkolben könnte den Schalter direkt betätigen.

Bei einer weiteren Ausführungsform ist die mechanische Kopplung außerhalb des Arbeitsströmungsweges angeordnet, so dass sie keiner besonderen Abdichtungen bedarf.

Bei einer weiteren Ausführungsform ist der elektrische Schalter an der Außenseite des Gehäuses des Sitzventils oder neben der die Regelkraft erzeugenden Komponente angeordnet und verbindet der Stößel den Steuerkolben mit dem Betätigungselement des Schalters. Dies spart Bauraum und ist herstellungstechnisch günstig.

Zweckmäßig ist der elektrische Schalter oder sein Betätigungselement am Gehäuse verstellbar angeordnet oder lässt sich die Wirklänge des Stößels ändern. Dies erleichtert die Einstellung des Schaltpunktes.

Anhand der Zeichnung werden Ausführungsformen des Erfindungsgegenstandes erläutert. Es zeigen:
- Fig. 1: als Blockschaltbild eine Ausführungsform eines elektrohydraulischen Spannmoduls für eine Werkzeugmaschine,
- Fig. 2: als Blockschaltbild eine weitere Ausführungsform,
- Fig. 3: als Blockschaltbild eine weitere Ausführungsform,
- Fig. 4: als Blockschaltbild eine weitere Ausführungsform,
- Fig. 5: einen Schnitt durch ein druckregelndes Sitzventil mit Drucküberwachungssensor für Spannmodule beispielsweise der vorhergehenden Ausführungsformen, und
- Fig. 6: einen Schnitt einer weitere Ausführungsform des Sitzventils.

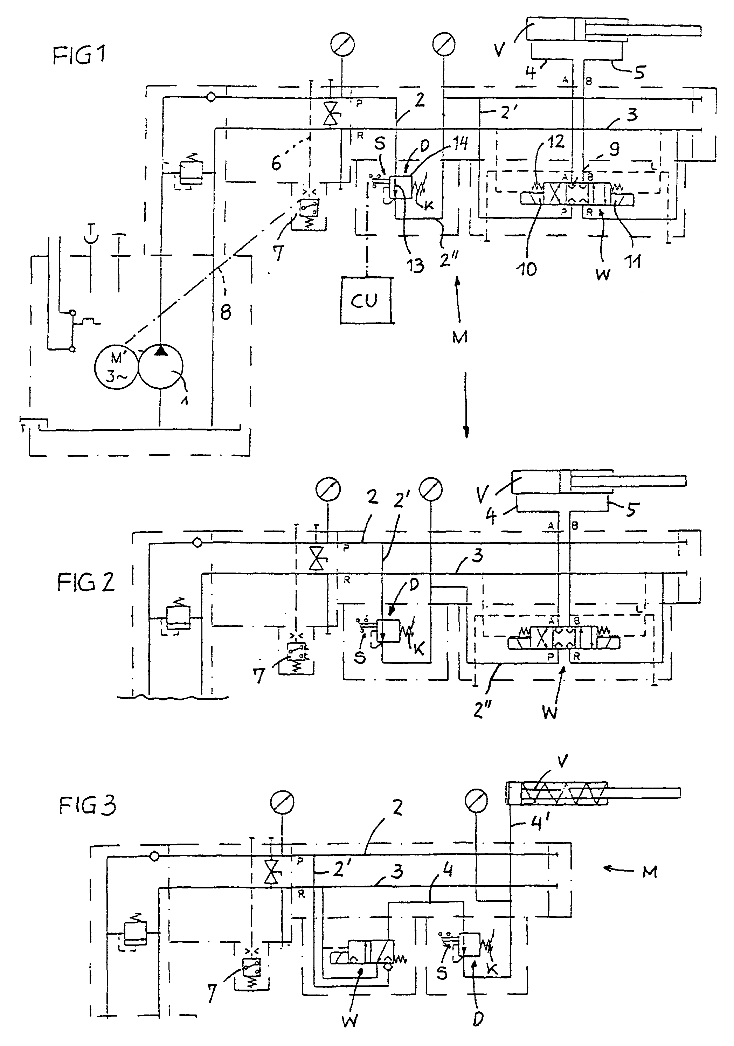

Ein elektrohydraulischer Spannmodul M für eine Werkzeugmaschine, beispielsweise für eine Fräsmaschine oder ein Bearbeitungs-Zentrum, weist in Fig. 1 eine durch eine von einem Motor M' getriebene Pumpe 1 versorgte Druckleitung 2 und eine Rücklaufleitung 3 auf. In der Pumpenleitung 2 ist ein nicht mit dem Rücklauf verbundenes, in der Sperrstellung leckagefreies Sitzventil 14 als Druckregelventil D mit einem Drucküberwachungssensor S und einem durch eine Regelkraft K beaufschlagten Ventilschließglied 13 vorgesehen, mit dem aus dem von der Pumpe 1 bereitgestellten ungeregelten Druck in einem Pumpenleitungszweig 2" ein im Druckwert von der Regelkraft K abhängiger, geregelter Druck eingestellt wird. An einem vom Pumpenleitungsabschnitt 2" abzweigenden Pumpenleitungszweig 2' ist ein Anschluß P eines 4/3-Wegesteuerventil W in Sitzventilbauart angeschlossen, dessen Anschluß R an die Rücklaufleitung 3 angeschlossen ist. An die Anschlüsse A, B des Wegesteuerventils W sind Verbraucherleitungen 4, 5 eines ebenfalls zweckmäßig leckagefreien Spannelementes V der Spannvorrichtung angeschlossen. Der Sitzventilcharakter des Wegesteuerventils W ist bei 9 symbolisch angedeutet. Dies bedeutet, daß in der gezeigten Absperrstellung des Wegesteuerventils W, die durch Federn 12 eingestellt wird, beide Verbraucherleitungen 4, 5 leckagefrei dicht abgesperrt sind. Das Wegesteuerventil W dient zur Richtungssteuerung des Spannelementes V. Die Schaltstellungen des Wegesteuerventils W werden durch Magneten10, 11 bewirkt.

Der Drucküberwachungssensor S ist beispielsweise ein elektrischer Schalter, der bei Erreichen des Werts des geregelten Drucks oder bei einem um eine vorbestimmte Differenz niedrigeren Werts, von z.B. 10 Bar, unterhalb des eingestellten Werts des geregelten Drucks ein Signal an eine übergeordnete Steuereinheit CU übermittelt, die weitere Arbeitsschritte des Spannmoduls steuert.

Stromauf des Druckregelventils D ist über eine Steuerleitung 6 ein Druckschalter 7 an die Pumpenleitung 2 angeschlossen, der in Schaltverbindung 8 mit dem Motor M' der Pumpe 1 steht. Über den Druckschalter 7, der auf einen vorbestimmten Druckwert höher als der des geregelten Drucks anspricht, wird die Pumpe 1 abgeschaltet, falls dieser vorbestimmte Druck erreicht ist, bzw. wird die Pumpe 1 eingeschaltet, solange dieser vorbestimmte Druck nicht erreicht ist, ggfs. weitere an den Pumpenleitungsabschnitt 2" angeschlossene Verbraucher erhalten hier ebenfalls den geregelten Druck.

In der Ausführungsform des Spannmoduls M in Fig. 2 ist das Drucküberwachungsventil D, ebenfalls als leckagefreies Sitzventil, zwischen Pumpenleitungszweigen 2' und 2" angeordnet, wobei der Pumpenleitungszweig 2" zum Eingang P des Wegesteuerventils W führt. Es wird durch das Druckregelventil D der jeweilige Verbraucherleitungsdruck in den Verbraucherleitungen 4, 5 eingestellt, und wird durch den Drucküberwachungssensor S das Erreichen des geregelten Druckes oder eines geringfügig geringeren Drucks gemeldet. Ggfs. an die Pumpenleitung 2 angeschlossene weitere Verbraucher werden mit dem ungeregelten Druck beaufschlagt.

Der Druck in der Pumpenleitung 2 kann wie in Fig. 1 durch einen Druckschalter 7 zum Ein- und Ausschalten der Pumpe überwacht werden.

In dem Spannmodul M in Fig. 3 ist das Spannelement V ein einseitig gegen Federkraft beaufschlagbarer Zylinder und ist das Wegesteuerventil W ein 3/2-Wegesteuerventil mit leckagefreier Sitzventilfunktion. Zwischen Verbraucherleitungsabschnitten 4 und 4' ist das Druckregelventil D als leckagefreies Sitzventil mit dem Drucküberwachungssensor S eingeordnet, so daß der Ausfahrdruck für das Spannelement V geregelt und überwacht wird. Der Druckschalter 7 kann zum Ein- und Ausschalten der Pumpe dienen.

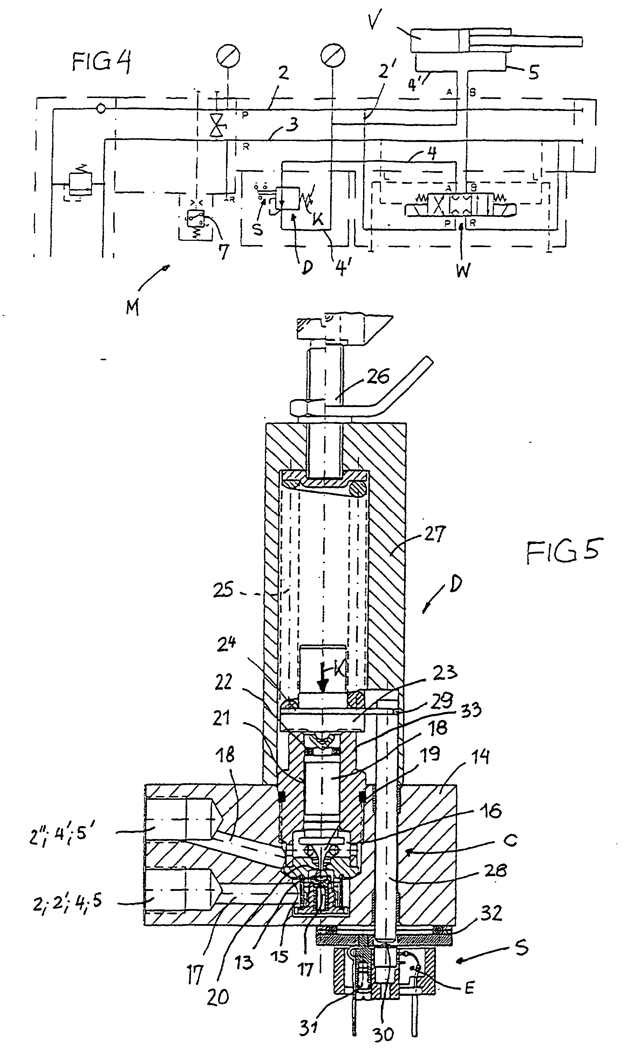

In dem Spannmodul M von Fig. 4 ist das Spannelement V ein doppelseitig beaufschlagbarer Hydraulikzylinder, wobei zwischen Verbraucherleitungsabschnitten 4, 4' das Druckventil D in Form des Sitzventils mit zugeordnetem Drucküberwachungssensor S angeordnet ist, um den Ausfahrdruck des Spannelementes V zu regeln und zu überwachen. Die andere Verbraucherleitung 5 verbindet den Ausgang B des Wegesteuerventils W (in Sitzventilbauweise) direkt mit dem Spannelement V. Es wäre denkbar, das Druckregelventil D mit dem Drucküberwachungssensor S in der anderen Verbraucherleitung 5 anzuordnen, oder beide Verbraucherleitungen 4, 5 jeweils mit einem Druckregelventil D (ggfs. mit auf unterschiedliche Drücke eingestelltem Sensor S) auszustatten. Das Wegesteuerventil W ist über einen Pumpenleitungszweig 2' an die Pumpenleitung 2 angeschlossen, so daß weitere, nicht gezeigte Verbraucher den ungeregelten Druck erhalten. Die Pumpenleitung 2 ist durch den Druckschalter 7 zum Ein- und Ausschalten der Pumpe abgesichert.

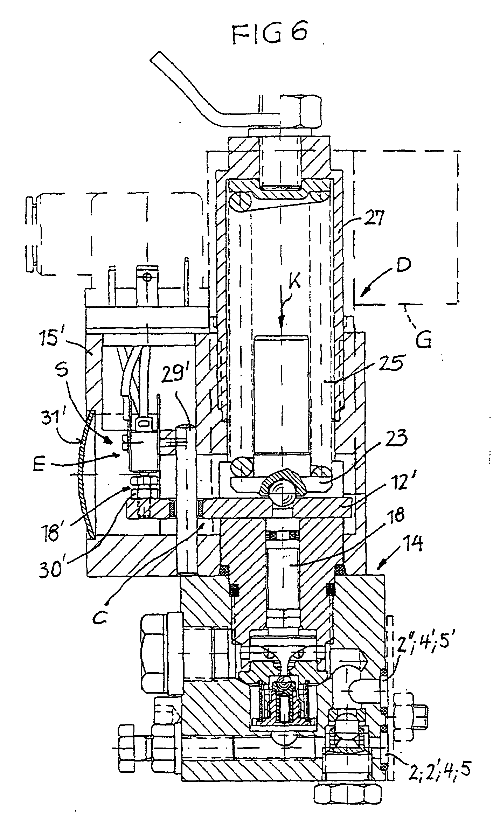

In Fig. 5 ist das in den Fig. 1 bis 4 schematisch angedeutete Druckregelventil D als Sitzventil 14 mit seinem Drucküberwachungssensor S in einem Vertikalschnitt gezeigt. Das Sitzventil 14 weist in seinem Gehäuse eine erste Kammer 15 und davon durch einen Ventilsitz 20 getrennt eine zweite Kammer 16 auf. Die erste Kammer 15 ist entsprechend den Blockschaltbildern der Fig. 1 bis 4 über einen Kanal 17 mit der Pumpenleitung 2 oder dem Pumpenleitungsabschnitt 2' oder der Verbraucherleitung 4 bzw. 5 verbunden. Die zweite Kammer 16 ist über einen Kanal 18 mit dem Pumpenleitungsabschnitt 2" oder dem Verbraucherleitungsabschnitt 4' bzw. 5' verbunden. In den Ausführungsformen der Fig. 3 und 4 könnte das Gehäuse des Druckregelventils D direkt an das Gehäuse des Wegesteuerventils angebaut oder ein Teil dessen Gehäuses sein.

Das Schließglied 13 ist bei der gezeigten Ausführungsform eine Kugel, die sich an einer Führungs- und Dämpfungseinrichtung 17 abstützt und in der ersten Kammer 15 befindet.

In der zweiten Kammer 16 ist ein Steuerkolben 18 angeordnet, dessen Beaufschlagungsfläche größer ist als die Querschnittsfläche des Ventilsitzes 20. Der Steuerkolben 18 ist in einer die zweite Kammer 16 mündenden Führungsbohrung 21 durch eine Dichtung 22 leckagefrei abgedichtet verschieblich geführt und dem Druck in der zweiten Kammer 16 ausgesetzt. Am unteren Ende des Steuerkolbens 18 ist ein Stößel 19 vorgesehen, der mit radialem Spiel durch den Ventilsitz 20 hindurch am Schließglied 13 angreift. Die Führungsbohrung 21 ist beispielsweise in einer in die zweite Kammer 16von oben eingeschraubten Hülse 33 enthalten, deren freies Ende eine Hubbegrenzung für die tiefstmögliche Position des Steuerkolbens 18 entsprechend der größten Öffnungsstellung des Schließgliedes 13 definiert.

Die Regelkraft K wird über ein Widerlagerteil 23, und ggfs. mit einer Zwischenplatte 24, auf den Steuerkolben 18 übertragen und bei der gezeigten Ausführungsform durch wenigstens eine Regelfeder 25 in einer auf das Gehäuse aufgesetzten Kappe 27 erzeugt. Die Vorspannung der Regelfeder 25 ist mittels eines Proportionalmagneten G (s. Fig. 6) veränderbar, der die Regelkraft K in Abhängigkeit von der jeweiligen Bestromung einstellt und hält.

Mit dem Regelkolben 18 ist, z.B. über eine mechanische Kopplung C, der Drucküberwachungssensor S verbunden. Der Drucküberwachungssensor S ist beispielsweise ein elektrischer Schalter E, vorzugsweise ein Mikroschalter, mit einem Betätigungslement 30. Der elektrische Schalter E wird durch eine Einstellschraube 31 oder mit Unterlegteilen 32 außen am Gehäuse festgelegt, derart, daß sich der Schaltpunkt des elektrischen Schalters E einstellen läßt. Die mechanische Kopplung C weist einen parallel zum Steuerkolben 18 das Gehäuse durchsetzenden Stößel 28 auf, der auf das Betätigungselement 30 des elektrischen Schalters E ausgerichtet und über eine Nut 29 mit der Zwischenplatte 24 des Widerlagerteils 23, 24 gekuppelt ist. Der Stößel 25 durchsetzt eine Bohrung des Gehäuses des Sitzventils 14 und ist in Gleitlagern leichtgängig und spielfrei geführt.

In Fig. 5 ist das Sitzventil in drucklosem Zustand bei maximaler Öffnungsstellung des Schließgliedes 15 gezeigt. Die Regelfeder 25 ist auf einen bestimmten Druckwert eingestellt. Baut sich in der ersten Kammer 15 Druck auf, so wird dieser zunächst durch den Ventilsitz 20 in die zweite Kammer 16 übertragen. Der Steuerkolben 18 wird durch diesen Druck entgegen der Regelkraft K beaufschlagt. Mit in der zweiten Kammer 16 zunehmendem Druck wird der Steuerkolben 18 gegen die Regelkraft K nach oben verschoben, bis er schließlich bei Erreichen des Werts des eingestellten geregelten Drucks das Schließglied 15 zur Anlage an den Ventilsitz 20 kommen läßt, so daß der Druck in der zweiten Kammer 16 nicht mehr weiter steigt. Sollte aufgrund Verbrauchs der Druck in der zweiten Kammer 16 sinken, dann wird über den Stößel 19 des Steuerkolbens 18 unter der Regelkraft K das Schließglied 13 wieder vom Ventilsitz 20 entfernt, um den geregelten Druck wieder herzustellen. Der Stößel 28 folgt der Bewegung des Steuerkolbens 18. Beispielsweise ist bis zum Erreichen des geregelten Drucks das Betätigungselement 30 gedrückt, so daß der elektrische Schalter E kein Signal liefert. Bei Erreichen des Werts des geregelten, durch die Regelkraft K eingestellten Drucks schaltet der elektrische Schalter E, um ein GUT-Signal abzugeben und an die übergeordnete Steuereinheit CU zu übermitteln. Zweckmäßigerweise ist der Schaltpunkt des elektrischen Schalters E jedoch nicht exakt auf den Wert des geregelten Drucks eingestellt, sondern auf einen Wert, der geringfügig niedriger ist, z.B. um 10 Bar niedriger. Diese Druckdifferenz wird über den gesamten Einstellbereich der Regelfeder 25 bei der Meldung des elektrischen Schalters eingehalten, weil der Steuerkolben 18 unabhängig vom Kraftwert der Regelfeder 25 jeweils dieselbe Position erreicht, wenn der geregelte Druck bzw. ein um 10 Bar geringerer Druck vorliegt.

Um ein Schnarren des 2/2-Wegesitzventils bei der Regelung auszuschließen, kann eine nicht dargestellte Dämpfungsvorrichtung für die Bewegungen des Regelkolbens 18, zumindest in einer Bewegungsnchtung, vorgesehen sein.

Der Drucküberwachungssensor S könnte auch im Gehäuse angeordnet sein oder direkt beim Widerlagerteil 23, 24.

In Fig. 6 ist der elektrische Schalter E zur Drucküberwachung seitlich neben der die Regelkraft K erzeugenden Regelfeder 25 in einem Hohlraum eines Gehäuseteils 15', z.B. in einer festgelegten Position, montiert. Die Koppelung C, gebildet durch das Widerlager 12' und den Stößel 18' erstreckt sich seitlich vom Steuerkolben 18 nach oben. Die Außen- und Seitenflächen des Gehäuses 14 sind aus Montagegründen frei. Ein Stift 29' im Gehäuseteil 15' bildet eine Verdrehsicherung für die Kopplung C. Der Stößel 18' ist nach Art einer Verstellschraube mit Kontermuttern 30' längenverstellbar, um den Schaltpunkt einstellen zu können. Im Gehäuseteil 15' ist in einem Fenster eine herausnehmbare Abdeckung 31' vorgesehen. Statt der Regelfeder 25 könnte ein Proportionalmagnet G (gestrichelt angedeutet) die Regelkraft K in Abhängigkeit von seiner Bestromung erzeugen. Die Funktion des Sitzventils D entspricht der bereits erläuterten.

## Patentansprüche

1. Elektrohydraulischer Spannmodul (M) für wenigstens ein hydraulisches Spannelement (V) einer Werkzeugmaschine, mit wenigstens einem an eine Pumpen- und eine Rücklaufleitung (2, 3) angeschlossenen Wegesteuerventil (W), an das ausgangsseitig wenigstens eine Verbraucherleitung (4, 5) des Spannelements (V) angeschlossen ist, mit wenigstens einem im Strömungsweg von der Pumpenleitung (2) zum Spannelement (V) angeordneten Druckregelventil (D) zum Regeln des Verbraucherleitungsdrucks auf einen über eine Regelkraft (K) einstellbaren Wert, und mit einem dem Druckregelventil (D) zugeordneten elektrischen Drucküberwachungssensor (S) für den geregelten Druck, **dadurch gekennzeichnet, dass** das Wegesteuerventil (W) mit in Absperrstellung leckagefreier Sitzventilfunktion ausgebildet ist, dass das Druckregelventil (D) ein in der Absperrstellung leckagefreies Sitzventil (14) mit einem relativ zu einem Ventilsitz (20) bewegbaren Schließglied (13) ist, welches durch einen vom geregelten Druck stromab des Ventilsitzes (20) in Schließrichtung des Schließgliedes (13) gegen die Regelkraft (K) direkt beaufschlagbaren Steuerkolben (18) verstellbar ist, dass der Drucküberwachungssensor (S) vom Steuerkolben (18) des Sitzventils (14) über eine mechanische Kopplung (C) betätigbar ist, dass der Steuerkolben (18) jeweils bei Erreichen des über die Regelkraft (K) eingestellten Werts des geregelten Drucks in eine Position bringbar ist, die unabhängig von der Einstellung der Regelkraft (K) ist, und dass der Schaltpunkt des Drucküberwachungssensors (S) zumindest im Wesentlichen auf diese Position des Steuerkolbens (18) eingestellt ist.

2. Elektrohydraulischer Spannmodul nach Anspruch 1, **dadurch gekennzeichnet, dass** der Schaltpunkt des Drucküberwachungssensors (S) mit einer gewählten Differenz unterhalb des eingestellten Werts des geregelten Drucks eingestellt ist.

3. Elektrohydraulischer Spannmodul nach Anspruch 1, **dadurch gekennzeichnet, dass** das Sitzventil (14) in wenigstens einer Verbraucherleitung (4, 5) stromab des Wegesteuerventils (W) angeordnet ist.

4. Elektrohydraulischer Spannmodul nach Anspruch 1, **dadurch gekennzeichnet, dass** der Drucküberwachungssensor (S) ein elektrischer Schalter (E), vorzugsweise ein Mikroschalter, mit einem Betätigungselement (30) für die mechanische Kopplung (C) ist.

5. Elektrohydraulischer Spannmodul nach Anspruch 1, **dadurch gekennzeichnet, dass** die mechanische Kopplung (C) außerhalb des Arbeitsströmungswegs im Sitzventil (14) angeordnet ist.

6. Elektrohydraulischer Spannmodul nach Anspruch 4, **dadurch gekennzeichnet, dass** der elektrische Schalter (E) an einer Außenseite des Gehäuses des Sitzventils (14) oder in einem auf dem Gehäuse angeordneten Gehäuseteil (15') angeordnet ist, und dass die mechanische Kopplung (C) einen parallel zum Steuerkolben (18) verschiebbaren Stößel (28, 18') enthält, der auf das Betätigungselement (30) des elektrischen Schalters (E) ausgerichtet ist.

7. Elektrohydraulischer Spannmodul nach Anspruch 6, **dadurch gekennzeichnet, dass** zum Einstellen des Schaltpunkts der elektrische Schalter (E) oder dessen Betätigungselement (30) am Gehäuse des Wegeventils (14) oder die Wirklänge des Stößels (18') verstellbar ist.

## Claims

1. Electrohydraulic clamping module (M) for at least one hydraulic clamping element (V) of a machine tool, comprising at least one directional control valve (W) connected to a pump line (2) and a return line (3), and to at least one consumer line (4, 5) of said clamping element (V), at least one pressure regulating valve (D) arranged in the flow path between said pump line (2) and said clamping element (V) for regulating the consumer line pressure at a selected value as adjusted by a regulating force (K), and an electric pressure monitoring sensor (S) structurally associated to said pressure regulating valve (D), for monitoring said regulated pressure **characterised in that** said directional control valve (W) is designed with a seat valve function for a leakage-free blocking position, that said pressure regulating valve (D) is a seat valve (14) with a leakage-free blocking position and having a closure member (13) which is movable in relation to a valve seat (20), the closure member (13) being displaceable by a control piston (18) which is directly actuated in valve closing direction by said regulated pressure downstream of said valve seat (20) and opposite to said regulating force (K), that said pressure monitoring sensor (S) is actuable by said control piston (18) of said seat valve (14) via a mechanical linking (C), that said control piston (18) always has a certain position when said regulated pressure as adjusted by said regulating force (K) is reached, which position is independent from the selected magnitude of the regulating force (K), and that the switching point of said pressure monitoring sensor (S) at least substantially is adjusted to said certain position of said control piston (18).

2. Clamping module as in claim 1, **characterised in that** said switching point of said pressure monitoring sensor (S) is set by a selected difference lower than the adjusted value of the regulated pressure.

3. Clamping module as in claim 1, **characterised in that** said seat valve (14) is provided in at least one of said consumer lines (4, 5) downstream of said directional control valve (W).

4. Clamping module as in claim 1, **characterised in that** said pressure monitoring sensor (S) is an electric switch (E), preferably a micro-switch, having an actuating element (30) for actuation by said mechanical linking (C).

5. Clamping module as in claim 1, **characterised in that** said mechanical linking (C) is provided outside of the working flow path in said seat valve (14).

6. Clamping module as in claim 4, **characterised in that** said electric switch (E) is arranged at an outer surface of the housing of said seat valve (14) or in a housing part (15') provided on top of said housing, and that said mechanical linking (C) contains a plunger (28, 18') which is displaceable in parallel to said control piston (18) and is aligned with said actuating element (30) of said electric switch (E).

7. Clamping module as in claim 6, **characterised in that** for an adjustment of said switching point of said electric switch (E) either said electric switch (E) or said actuating element (30) is adjustably arranged at said housing of said seat valve (14), or that the effective length of said plunger (18') is adjustable.

## Revendications

1. Module de serrage électrohydraulique (M) pour au moins un élément de serrage (V) hydraulique d'une machine-outil, comportant au moins un distributeur pilote (W) raccordé à une ligne de pompage et une ligne de retour (2, 3), à laquelle est raccordée, du côté sortie, au moins une ligne de récepteur (4, 5) de l'élément de serrage (V), comportant au moins une vanne de régulation de pression (D) disposée dans une voie d'écoulement de la ligne de pompage (2) vers l'élément de serrage (V) pour réguler la pression de la ligne de récepteur à une valeur réglable au moyen d'une force de régulation (K) et comportant un capteur de surveillance de pression (S) électrique pour la pression régulée, associé à la vanne de régulation de pression (D), **caractérisé en ce que** le distributeur pilote (W) est réalisé avec une fonction de vanne à siège sans fuite dans la position d'arrêt, que la vanne de régulation de pression (D) est une vanne à siège (14) sans fuite dans la position d'arrêt comportant, mobile par rapport à un siège de vanne (20), un organe obturateur (13) qui peut être déplacé par un piston de commande (18) pouvant recevoir directement contre la force de régulation (K) la pression régulée en aval du siège de vanne (20) dans le sens de fermeture de l'organe obturateur, que le capteur de surveillance de pression (S) peut être actionné par le piston de commande (18) de la vanne à siège (14) par l'intermédiaire d'un accouplement mécanique (C), que le piston de commande (18), chaque fois qu'est atteinte la valeur réglée de la pression régulée au moyen de la force de régulation (K), peut être amené dans une position qui est indépendante du réglage de la force de régulation (K), et que le point de commutation du capteur de surveillance de pression (S) est réglé au moins substantiellement à cette position du piston de commande (18).

2. Module de serrage électrohydraulique selon la revendication 1, **caractérisé en ce que** le point de commutation du capteur de surveillance de pression (S) est réglé avec une différence choisie en dessous de la valeur réglée de la pression régulée.

3. Module de serrage électrohydraulique selon la revendication 1, **caractérisé en ce que** la vanne à siège (14) est disposée dans au moins une ligne de récepteur (4, 5) en aval du distributeur pilote (W).

4. Module de serrage électrohydraulique selon la revendication 1, **caractérisé en ce que** le capteur de surveillance de pression (S) est un commutateur électrique (E), de préférence un microrupteur, avec un élément d'actionnement (30) pour l'accouplement mécanique (C).

5. Module de serrage électrohydraulique selon la revendication 1, **caractérisé en ce que** l'accouplement mécanique (C) est disposé en dehors de la voie d'écoulement de travail dans la vanne à siège (14).

6. Module de serrage électrohydraulique selon la revendication 4, **caractérisé en ce que** le commutateur électrique (E) est disposé sur un côté extérieur du corps de la vanne à siège (14) ou dans une partie de corps (15") disposée sur le corps et que l'accouplement mécanique (C) contient un coulisseau (28, 18"), capable de coulisser parallèlement au piston de commande (18), qui est orienté vers l'actionneur (30) du commutateur électrique (E).

7. Module de serrage électrohydraulique selon la revendication 6, **caractérisé en ce que** pour régler le point de commutation le commutateur électrique (E) ou son élément d'actionnement (30), sur le corps de la vanne distributrice (14), ou la longueur active du coulisseau (18') peut être réglé.
